(19) Europäisches Patentamt
European Patent Office
Office européen des brevets

(11) Veröffentlichungsnummer: **0 579 232 B1**

(12) **EUROPÄISCHE PATENTSCHRIFT**

(45) Veröffentlichungstag der Patentschrift: **19.04.95**

(51) Int. Cl.$^{6}$: **C08K 5/29**, C08K 5/54, C09D 183/04

(21) Anmeldenummer: **93111390.6**

(22) Anmeldetag: **15.07.93**

# (54) Verfahren zur Erhöhung des Flammpunktes von Organosiloxanen mit SiOC-gebundenen Resten.

(30) Priorität: **16.07.92 DE 4223468**

(43) Veröffentlichungstag der Anmeldung:
**19.01.94 Patentblatt 94/03**

(45) Bekanntmachung des Hinweises auf die Patenterteilung:
**19.04.95 Patentblatt 95/16**

(84) Benannte Vertragsstaaten:
**BE DE FR GB IT NL**

(56) Entgegenhaltungen:
**EP-A- 0 109 979**
**EP-A- 0 342 411**
**US-A- 3 032 530**
**US-A- 4 395 526**
**US-A- 4 489 191**
**US-A- 4 495 331**

(73) Patentinhaber: **Wacker-Chemie GmbH**
**Hanns-Seidel-Platz 4**
**D-81737 München (DE)**

(72) Erfinder: **Roth, Michael, Dr.**
**Orffstrasse 11**
**D-84489 Burghausen (DE)**
Erfinder: **von Au, Günter, Dr.**
**Moosbrunner Strasse 32**
**D-84489 Burghausen (DE)**
Erfinder: **Blümlhuber, Christa**
**Mittling 25 1/2**
**D-84524 Neuötting (DE)**
Erfinder: **Weidner, Richard, Dr.**
**Lindacher Strasse 69**
**D-84489 Burghausen (DE)**
Erfinder: **Schmidt, Edgar**
**Gluckstrasse 27**
**D-84489 Burghausen (DE)**
Erfinder: **Solbrig, Christian, Dr.**
**Roseggerstrasse 3**
**D-84561 Mehring (DE)**

EP 0 579 232 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Erhöhung des Flammpunkts von Organosiloxanen mit SiOC-gebundenen Resten, in dem die Organosiloxane mit Hydroxylgruppen abfangenden Verbindungen versetzt werden.

Organosiloxane mit SiOC-gebundenen Resten, wie Alkoxysiloxane, neigen bei der Lagerung, insbesondere in Anwesenheit eines Katalysators, zum Äquilibrieren. Bei diesem Vorgang entstehen leichtflüchtige Verbindungen, die den Flammpunkt des Produkts stark herabsetzen. Beim Einsatz des Produkts, beispielsweise zur Behandlung von Baustoffen, ist ein niedriger Flammpunkt unerwünscht.

In der EP-A-249 960 ist ein Verfahren zum Stabilisieren von SiC-gebundene Kohlenwasserstoffreste enthaltenden Organopolysiloxanölen beschrieben, bei dem als Stabilisatoren Hexamethyldisilazan, N,N-Bistrimethylsilylacetamid (BSA) und N,N'-Bistrimethylsilylharnstoff eingesetzt werden. Diese Öle bilden bei thermischer und mechanischer Belastung weniger Abbauprodukte. Die vorstehenden Verbindungen sind zum Stabilisieren von Organosiloxanen mit SiOC-gebundenen Resten nicht geeignet, da sie keine oder nur geringe stabilisierende Wirkung zeigen.

US-A-4 495 331 und US-A-4 395 526 beschreiben einkomponentige, bei Raumtemperatur zu Elastomeren vernetzbare Siliconmassen, denen zur Verbesserung der Lagerstabilität Isocyanate bzw. Oximatosilane zugesetzt werden.

Aufgabe der Erfindung war es, den Flammpunkt von Organosiloxanen mit SiOC-gebundenen Resten durch Zugabe eines Stabilisators zu erhöhen.

Die genannten Aufgaben werden durch die vorliegende Erfindung gelöst durch ein Verfahren zum Stabilisieren von Organosiloxanen der allgemeinen Formel (IV)

$$R_xSi(OR^2)_y(OH)_zO_{\frac{4-x-y-z}{2}}, \qquad (IV)$$

wobei **R** einen gegebenenfalls halogensubstituierten $C_1$-$C_{16}$-Kohlenwasserstoffrest bedeutet, $\mathbf{R^2}$ einen $C_1$-$C_6$-Alkylrest bedeutet, **x** den Wert 0,1,2 oder 3, durchschnittlich 0,9 bis 1,8 hat, **y** den Wert 0,1,2 oder 3, durchschnittlich 0,5 bis 1,5 hat, **z** den Wert 0,1,2 oder 3, durchschnittlich 0,0 bis 0,5 hat und die Summe von $x + y + z$ höchstens 3,5 beträgt,
in dem die Organosiloxane mit Hydroxylgruppen abfangenden Verbindungen versetzt werden, welche ausgewählt werden aus

a) organischen Isocyanaten,

b) Verbindungen der allgemeinen Formel (I)

$X_mSiR_n$, (I)

in der **X** einen Rest der allgemeinen Formel (II)

$R^1COO-$ (II)

oder der allgemeinen Formel (III)

$RR^1C=N-O-$ (III)

bedeutet, wobei **R** die vorstehenden Bedeutungen aufweist und $\mathbf{R^1}$ die Bedeutung **R** oder ein Wasserstoffatom aufweist, **m** den Wert 1,2,3 oder 4 hat, **n** den Wert 0,1,2 oder 3 hat und die Summe von **m** + **n** = 4 ist, oder deren Gemischen.

Als Hydroxylgruppen abfangende organische Isocyanate sind alle organischen Isocyanate geeignet. Beispiele für geeignete organische Isocyanate sind Mono-, Di- und Polyisocyanate, wie 4-Tolylsulfonylisocyanat, 2,6- und 3,5-Dichlorphenyl-isocyanat, 2,6-Diisopropyl-phenyl-isocyanat, 3-Isocyanatomethyl-3,5,5-trimethylcyclohexyl-isocyanat und dessen Polymere, Polyisocyanate auf der Basis von Diphenylmethandiisocyanat, Polymere des Diphenylmethan-diisocyanats, Polymere des Hexamethylen-1,6-diisocyanats, Trimethylsilyl-isocyanat und Isocyanatogruppen aufweisende Reaktionsprodukte von Di- oder Polyisocyanaten mit Hydroxyl-endständigen organischen oder siliziumorganischen Verbindungen. Bevorzugt werden bei dem erfindungsgemäßen Verfahren wegen ihrer geringen Flüchtigkeit Polyisocyanate verwendet. 3-Isocyanatomethyl-3,5,5-trimethylcyclohexyl-isocyanat (Isophorondiisocyanat) wird besonders bevorzugt eingesetzt.

Die Hydroxylgruppen abfangenden Verbindungen, welche die allgemeine Formel (I) aufweisen, in der **X** einen Rest der allgemeinen Formel (II) bedeutet, sind beispielsweise in W. Noll, 2. Auflage 1968, Verlag Chemie, Weinheim, Kap. 3.10, beschrieben. Vorzugsweise bedeutet $\mathbf{R^1}$ in der allgemeinen Formel (II) einen Methylrest, **R** einen $C_1$-$C_6$-Alkylrest und **m** den Wert 2 oder 3. Besonders bevorzugt ist Ethyltriacetoxysilan.

Die Hydroxylgruppen abfangenden Verbindungen, welche die allgemeine Formel (I) aufweisen, in der **X** einen Rest der allgemeinen Formel (III) bedeutet, sind beispielsweise in "Mechanismus und Strukturen in der organischen Chemie", Edwin S. Gould, Verlag Chemie, Weinheim, 1969, Seite 748, beschrieben. Vorzugsweise bedeutet $\mathbf{R^1}$ in der allgemeinen Formel (III) ein Wasserstoffatom oder einen $C_1$-$C_6$-Alkylrest, insbesondere einen $C_1$-$C_6$-Alkylrest, R einen $C_1$-$C_6$-Alkylrest und **m** den Wert 3 oder 4. Besonders bevorzugt sind Methyl-tris(methyl-ethyl-ketoximo)-silan, Tetra(methyl-ethyl-ketoximo)-silan und Vinyl-tris-(methyl-ethyl-ketoximo)-silan.

Beispiele für die $C_1$-$C_{16}$-Kohlenwasserstoffreste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; Aralkylreste, wie der Benzylrest, der alpha- und der $\beta$-Phenylethylrest.

Beispiele für halogensubstituierte $C_1$-$C_{16}$-Kohlenwasserstoffreste **R** sind mit Fluor-, Chlor-, Brom- und Jodatomen substituierte Alkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Die Organosiloxane der allgemeinen Formel (IV) können beispielsweise nach dem aus der US-A-4,209,454 bekannten Verfahren hergestellt werden.

Das erfindungsgemäße Verfahren eignet sich insbesondere für die Erhöhung des Flammpunkts von mit Kondensationskatalysator versetzten Organopolysiloxanen, die beispielsweise zur Behandlung von Baustoffen verwendet werden.

Die Kondensationskatalysatoren können sauer, neutral oder basisch sein. Beispiele für solche Kondensationskatalysatoren sind insbesondere Carbonsäuresalze von Zinn oder Zink, wobei an Zinn Kohlenwasserstoffreste direkt gebunden sein können, wie Di-n-butylzinndilaurat, Zinnoctoate, Di-2-ethylzinndilaurat, Di-n-butylzinndi-2-ethylhexoat, Di-2-ethylhexylzinndi-2-ethylhexoat, Dibutyl- oder Dioctylzinndiacylate, wobei sich die Acylatgruppen jeweils von Alkansäuren mit 3 bis 16 Kohlenstoffatomen je Säure ableiten, bei denen mindestens zwei der Valenzen des an die Carboxylgruppe gebundenen Kohlenstoffatoms durch mindestens zwei andere Kohlenstoffatome als dasjenige der Carboxygruppe abgesättigt sind, und Zinkoctoate. Weitere Beispiele für Katalysatoren sind Alkoxytitanate, wie Butyltitanate und Triethanolamintitanat, sowie Zirkonium- und Aluminiumverbindungen, insbesondere deren Carbonsäuresalze und Alkoholate.

Die eingesetzten Hydroxylgruppen abfangenden Verbindungen werden bei Anwesenheit eines Kondensationskatalysators so ausgewählt, daß keine Reaktion des Stabilisators mit dem Kondensationskatalysator stattfindet. Beispielsweise wird ein organisches Isocyanat nicht Organosiloxanen zugesetzt, die mit Aminen oder Alkoholen versetzt sind.

Das erfindungsgemäße Verfahren eignet sich auch für Organosiloxane der allgemeinen Formel (IV), welche gegebenenfalls neben Katalysatoren Silane der allgemeinen Formel (V)

$(RO)_mSiR_n$,   (V)

enthalten, wobei **R**, **m**, **n** und die Summe von **m + n** die vorstehenden Bedeutungen aufweisen. Vorzugsweise bedeutet **R** in der allgemeinen Formel (V) einen $C_1$-$C_6$-Alkylrest und **m** den Wert 3 oder 4. Vorzugsweise enthalten die Organosiloxane der allgemeinen Formel (IV) höchstens 90 Gew.-%, insbesondere höchstens 50 Gew.-%, Silane der allgemeinen Formel (V).

Bei dem erfindungsgemäßen Verfahren werden die Organosiloxane vorzugsweise mit 0,01 bis 5, insbesondere 0,25 bis 3 Gew.-% der Hydroxylgruppen abfangenden Verbindungen versetzt. Die Hydroxylgruppen abfangenden Verbindungen werden vorzugsweise in das Organosiloxan kalt zugemischt.

In den folgenden Beispielen sind, falls jeweils nicht anders angegeben,

a) alle Mengenangaben auf das Gewicht bezogen;
b) alle Drücke 0,10 MPa (abs.);
c) alle Temperaturen 25 °C .

Beispiel 1

Ein Organosiloxan (A), hergestellt nach dem in der US-A-4,209,454 beschriebenen kontinuierlichen Verfahren, wobei als Rohstoff Methyltrichlorsilan, Isooctyltrichlorsilan, Methanol und Wasser im Gewichtsverhältnis wie 75/25/32/16 eingesetzt wurden, mit einer Viskosität von 14,3 $mm^2/s$ wurde mit 1,0 Gew.-% Dibutylzinnlaurat und verschiedenen Mengen Isophorondiisocyanat (IPDI) versetzt. Geprüft wurde der Flammpunkt sofort nach der Zubereitung der Mischungen (Ausgang), sowie nach einer 3-wöchigen Lagerung bei +50 °C. Die Meßwerte sind in der Tabelle I aufgeführt.

Tabelle I

| Flammpunkte nach DIN 51758* | | |
|---|---|---|
| | Ausgang | nach 3 Wochen/ + 50 °C |
| ohne IPDI | 46/47 °C | 39/38 °C |
| 0,25 Gew.% IPDI | 54/54 °C | 43/38 °C |
| 0,50 Gew.% IPDI | 61/59 °C | 46/41 °C |
| 0,75 Gew.% IPDI | 67/67 °C | 50/47 °C |
| 1,00 Gew.% IPDI | 77/80 °C | 54/50 °C |
| 1,50 Gew.% IPDI | 99/98 °C | 93/95 °C |

* gemessen bei zwei verschiedenen Produktions-Chargen des Organosiloxans (A).

Beispiel 2

Ein Organopolysiloxan (A), wie im Beispiel 1 beschrieben, in das 1,0 Gew.-Teile Dibutylzinndilaurat zugesetzt waren, wurden mit verschiedenen Mengen Ethyltriacetoxysilan versetzt. Der Flammpunkt dieser Gemische wurde sofort nach der Zubereitung (Ausgang) sowie nach einer 3-wöchigen Lagerung bei +50 °C gemessen. Die Werte sind in Tabelle II aufgeführt.

Tabelle II

Flammpunkt nach DIN 51758 *

| | Ausgang | nach 3 Wochen/+50°C |
|---|---|---|
| ohne Ethyltriacetoxysilan | 48/49°C | 40/40°C |
| 0,5 Gew.% " | 64/63°C | 52/54°C |
| 1,0 " | 74/74°C | 57/60°C |
| 2,0 " | 79/83°C | 62/65°C |

* gemessen bei zwei verschiedenen Produktions-Chargen des Organosiloxans (A)

Beispiel 3

a) Organosiloxan (A)

b) Organosiloxan bestehend aus einem Gemisch aus Organosiloxan (A), Organosiloxan (B), hergestellt nach dem in US-A-4,209,454 beschriebenen kontinuierlichen Verfahren, bei dem die Rohstoffe Methyltrichlorsilan, Ethanol und Wasser im Gewichtsverhältnis 152/40/20 eingesetzt wurden, mit einer Viskosität von 25 $mm^2/s$; Isooctyltriethoxysilan und Kieselsäureethylester mit einer Viskosität von 4,0 $mm^2/s$ im Gewichtsverhältnis 30/30/19/20.

c) Gemisch aus Organosiloxan (A) und einer hochdispersen Kieselsäure mit einer spezifischen Oberfläche von 300 $m^2/g$ im Gewichtsverhältnis 99/1.

Zu den Produkten a, b, c wurden jeweils 1,0 Gew.-Teile Dibutylzinndilaurat sowie verschiedene Mengen Ethyltriacetoxysilan gegeben.

Der Flammpunkt wurde innerhalb von 24 Stunden nach der Herstellung der Mischungen sowie nach einer 2-wöchigen Lagerung bei 50 ° C gemessen.

Tabelle III

Flammpunkte nach DIN 51758

| | | | Ausgang | nach 2 Wochen/+50°C |
|---|---|---|---|---|
| Organosiloxan a | ohne | Ethyltriacetoxysilan | 50°C | 39°C |
| " | 0,5 Gew.-% | " | 67°C | 57°C |
| " | 1,0 " | " | 81°C | 58°C |
| " | 1,5 " | " | 90°C | 68°C |
| Organosiloxan b | ohne | Ethyltriacetoxysilan | 49°C | 51°C |
| " | 0,5 Gew.-% | " | 60°C | 47°C |
| " | 1,0 " | " | 71°C | 46°C |
| " | 1,5 " | " | 80°C | 62°C |
| Organosiloxan c | ohne | Ethyltriacetoxysilan | 52°C | 36°C |
| " | 0,5 Gew.-% | " | 71°C | 51°C |
| " | 1,0 " | " | 80°C | 61°C |
| " | 1,5 " | " | 93°C | 75°C |

Beispiel 4

Die Gemische aus 96,0 Gew.-Teilen des im Beispiel 1 beschriebenen Organosiloxans (A), 1,0 Gew.-Teilen Dibutylzinndilaurat und 3,0 Gew.-Teilen der in der Tabelle 4 beschriebenen Oximosilane wurden sofort nach der Zubereitung sowie nach einer 2-wöchigen Lagerung bei +50 ° C auf ihren Flammpunkt untersucht.

Tabelle IV

| Flammpunkt nach DIN 51758 | | |
|---|---|---|
| Oximosilan | Ausgang | nach 2 Wochen bei +50 °C |
| a.) ohne Zusatz * | 55 °C | 37 °C |
| b.) M : T 88:12 ** | 83 °C | 50 °C |
| c.) M : T 91,9:8,1 ** | 77 °C | 50 °C |
| d.) M | 70 °C | 50 °C |
| e.) V | 85 °C | 49 °C |
| M bedeutet Methyl-tris(methyl-ethyl-ketoximo)-silan<br>T bedeutet Tetra(methyl-ethyl-ketoximo)-silan<br>V bedeutet Vinyl-tris(methyl-ethyl-ketoximo)-silan | | |

* nur 99,0 Gew.-Teile Organosiloxan A
sowie 1.0 Gew.-Teil Dibutylzinndilaurat
** Abmischungen der beiden Ketoxime im angegebenen Mengenverhältnis

Beispiel 5 (Vergleichsbeispiel)

Ein Organopolysiloxan (A), wie im Beispiel 1 beschrieben, in das 1,0 Gew.-% Dibutylzinndilaurat zugesetzt waren, wurde mit verschiedenen Hydroxylgruppen abfangenden Verbindungen versetzt. Der Flammpunkt dieser Gemische wurde sofort nach der Zubereitung (Ausgang) sowie nach einer 2-wöchigen Lagerung bei +50 °C gemessen. Die Werte sind in Tabelle V aufgeführt.

Tabelle V

| | Ausgang | | nach 2 Wochen/+50 °C | |
|---|---|---|---|---|
| | Flammpunkt | DIN | Flammpunkt | DIN |
| | 49 °C | 51758 | 40 °C | 51755 |
| 1% Hexamethyldisilazan | nach 24h Raumtemp. ausgefallen | | | |
| 1% Silylamin | 34 °C | 51755 | 33 °C | 51755 |
| 1% N,N-Bis-trimethylsilylacetamid | nach 24h Raumtemperatur ausgefallen | | | |
| 1% Ethyltriacetoxysilan | 78 °C | 51758 | 65 °C | 51758 |

**Patentansprüche**

**1.** Verfahren zur Erhöhung des Flammpunkts von Organosiloxanen der allgemeinen Formel (IV)

$$R_xSi(OR^2)_y(OH)_zO_{\frac{4-x-y-z}{2}} , \qquad (IV)$$

wobei **R** einen gegebenenfalls halogensubstituierten $C_1$-$C_{16}$-Kohlenwasserstoffrest bedeutet, **R²** einen $C_1$-$C_6$-Alkylrest bedeutet, **x** den Wert 0,1,2 oder 3, durchschnittlich 0,9 bis 1,8 hat, **y** den Wert 0,1,2 oder 3, durchschnittlich 0,5 bis 1,5 hat, **z** den Wert 0,1,2 oder 3, durchschnittlich 0,0 bis 0,5 hat und die Summe von x + y + z höchstens 3,5 beträgt,
in dem die Organosiloxane mit Hydroxylgruppen abfangenden Verbindungen versetzt werden, welche ausgewählt werden aus
a) organischen Isocyanaten,

b) Verbindungen der allgemeinen Formel (I)

$X_mSiR_n$, (I)

in der **X** einen Rest der allgemeinen Formel (II)

$R^1COO-$ (II)

oder der allgemeinen Formel (III)

$RR^1C=N-O-$ (III)

bedeutet, wobei **R** die vorstehenden Bedeutungen aufweist und **R¹** die Bedeutung **R** oder ein Wasserstoffatom aufweist, **m** den Wert 1,2,3 oder 4 hat, **n** den Wert 0,1,2 oder 3 hat und die Summe von **m** + **n** = 4 ist, oder deren Gemischen.

**2.** Verfahren nach Anspruch 1, wobei mit einem Kondensationskatalysator versetzte Organopolysiloxane stabilisiert werden.

**3.** Verfahren nach Anspruch 1 oder 2, wobei als Hydroxylgruppen abfangende Verbindung Isophorondiisocyanat eingesetzt wird.

**4.** Verfahren nach Anspruch 1 oder 2, wobei die Hydroxylgruppen abfangenden Verbindungen die allgemeine Formel (I) aufweisen, in der **X** einen Rest der allgemeinen Formel (II) bedeutet, **R¹** einen Methylrest bedeutet, **R** einen $C_1$-$C_6$-Alkylrest bedeutet und **m** den Wert 2 oder 3 hat.

**5.** Verfahren nach Anspruch 1 oder 2, wobei die Hydroxylgruppen abfangenden Verbindungen die allgemeine Formel (I) aufweisen, in der **X** einen Rest der allgemeinen Formel (III) bedeutet, **R¹** ein Wasserstoffatom oder einen $C_1$-$C_6$-Alkylrest bedeutet, **R** einen $C_1$-$C_6$-Alkylrest bedeutet und **m** den Wert 3 oder 4 hat.

**6.** Verfahren nach Anspruch 1 bis 5, wobei die Organosiloxane mit 0,01 bis 5 Gew.-% der Hydroxylgruppen abfangenden Verbindungen versetzt werden.

## Claims

**1.** Process for increasing the flash point of organosiloxanes of the general formula (IV)

$$\frac{R_xSi(OR^2)_y(OH)_zO_{4-x-y-z}}{2} \qquad (IV)$$

where R denotes an optionally halogen-substituted $C_1$-$C_{16}$-hydrocarbon radical, **R²** denotes a $C_1$-$C_6$-alkyl radical, **x** has the value 0, 1, 2 or 3, on average 0.9 to 1.8, **y** has the value 0, 1, 2 or 3, on average 0.5 to 1.5, **z** has the value 0, 1, 2 or 3, on average 0.0 to 0.5, and the sum of x + y + z is at most 3.5, in which the organosiloxanes are treated with compounds which scavenge hydroxyl groups, which are selected from

a) organic isocyanates,

b) compounds of the general formula (I)

$X_mSiR_n$, (I)

in which **X** denotes a radical of the general formula (II)

$R^1COO-$ (II)

or of the general formula (III)

$RR^1C=N\text{-}O\text{-}$ (III)

where **R** has the above meanings and **R¹** has the meaning **R** or a hydrogen atom, **m** has the value 1, 2, 3 or 4, **n** has the value 0, 1, 2 or 3 and the sum of **m** + **n** = 4, or mixtures thereof.

**2.** Process according to Claim 1, where organopolysiloxanes treated with a condensation catalyst are stabilized.

**3.** Process according to Claim 1 or 2, where isophorone diisocyanate is employed as the compound which scavenges hydroxyl groups.

**4.** Process according to Claim 1 or 2, where the compounds which scavenge hydroxyl groups have the general formula (I), in which **X** denotes a radical of the general formula (II), **$R^1$** denotes a methyl radical, **R** denotes a $C_1$-$C_6$-alkyl radical and **m** has the value 2 or 3.

**5.** Process according to Claim 1 or 2, where the compounds which scavenge hydroxyl groups have the general formula (I), in which **X** denotes a radical of the general formula (III), **$R^1$** denotes a hydrogen atom or a $C_1$-$C_6$-alkyl radical, **R** denotes a $C_1$-$C_6$-alkyl radical and **m** has the value 3 or 4.

**6.** Process according to Claims 1 to 5, where the organosiloxanes are treated with 0.01 to 5 % by weight of the compounds which scavenge hydroxyl groups.

## Revendications

**1.** Procédé pour élever le point d'inflammation d'organosiloxanes de formule générale (IV)

$$R_xSi(OR^2)_y(OH)_zO_{\frac{4-x-y-z}{2}} \quad (IV)$$

où R représente un reste hydrocarboné en $C_1$-$C_{16}$ éventuellement halogéné, $R^2$ représente un reste alkyle en $C_1$-$C_6$, x a la valeur 0, 1, 2 ou 3, en moyenne 0,9 à 1,8, y a la valeur 0,1, 2 ou 3, en moyenne 0,5 à 1,5, z a la valeur 0, 1, ou 3, en moyenne 0,0 à 0,5, et la somme de x + y + z s'élève au plus à 3,5,

dans lequel on ajoute aux organosiloxanes des composés fixateurs de groupes hydroxy, qui sont choisis parmi

a) des isocyanates organiques,

b) des composés de formule générale (I)

$X_mSiR_n$, (I)

dans laquelle X est un reste de formule générale (II)

$R^1COO\text{-}$ (II)

ou de formule générale (III)

$RR^1C=N\text{-}O\text{-}$ (III)

où R a les significations ci-dessus et $R^1$ a la signification de R ou représente un atome d'hydrogène, m a la valeur 1, 2, 3 ou 4, n a la valeur 0, 1, 2 ou 3 et la somme de m + n est égale à 4, ou leurs mélanges.

**2.** Procédé selon la revendication 1, dans lequel on stabilise des organopolysiloxanes additionnés d'un catalyseur de condensation.

3. Procédé selon la revendication 1 ou 2, dans lequel on utilise du diisocyanate d'isophorone comme composé fixateur de groupes hydroxy.

4. Procédé selon la revendication 1 ou 2, dans lequel les composés fixateurs de groupes hydroxy ont la formule générale (I) dans laquelle X représente un reste de formule générale (II), $R^1$ représente un reste méthyle, R représente un reste alkyle en $C_1$-$C_6$ et m a la valeur 2 ou 3.

5. Procédé selon la revendication 1 ou 2, dans lequel les composés fixateurs de groupes hydroxy ont la formule générale (I) dans laquelle X représente un reste de formule générale (III), $R^1$ représente un atome d'hydrogène ou un reste alkyle en $C_1$-$C_6$, R représente un reste alkyle en $C_1$-$C_6$ et m a la valeur 3 ou 4.

6. Procédé selon la revendication 1 à 5, dans lequel on ajoute aux organosiloxanes 0,01 à 5 % en masse de composés fixateurs de groupes hydroxy.